# EUROPEAN PATENT APPLICATION

(11) **EP 2 966 425 A1**
(43) Date of publication of application: **13.01.2016**
(21) Application number: 14176662.6
(22) Date of filing: 11.07.2014
(51) Int. Cl.: G01G 21/22, G01G 21/28

(54) **Weighing apparatus**

(71) Applicant: Mettler-Toledo AG, 8606 Greifensee (CH)
(72) Inventor: Tonani, Roberto, 8606 Greifensee (CH)

(57) **Abstract**

An apparatus (1) for weighing, the apparatus (1) comprising a housing (2) with a horizontally aligned primary side (4) in its operational position, the primary side (4) comprising slots (6); mounting pads (10) movably positioned within the slots (6), the mounting pads (10) configured to carry weight of an object to be weighed to at least one weighing module mounted within the housing (2); a draft tray (12) for preventing spilling of liquid material into the housing (2), the draft tray (12) capable of being placed on the primary side (4) of the housing (2); the draft tray (12) further comprising a flat plate (14) with an surrounding outer edge (17), the flat plate (14) further comprising holes (20), the mounting pads (10) configured to pass through the holes (20) of the draft tray (12), a vertically aligned first protrusion (22) directed towards the housing (2) is aligned to the outer edge (17) of the flat plate (14) for protecting the mounting pads (10) from air currents; and a weighing pan (24) capable of being placed on the mounting pads (10) accessible through the holes (20) of the draft tray (12) for weighing the object placed on itself. The weighing pan (24) comprises a central area (26) and feet (28), the feet (28) capable of being placed on the mounting pads (10) for transferring the force exerted by the object to be weighed to the mounting pads (10); the central area (26) further comprises a web of at least two spoke elements (30) intersecting at a centre of the weighing pan (27), the web of spoke elements (30) thus defining a plurality of openings (32) therein configured to allow the passage of air currents.

## Description

### Technical Field

The present invention is related to a precision weighing apparatus comprising a housing, a weighing module within the housing, and a weighing pan to be placed on the housing.

### Background Art

Precision weighing apparatuses are primarily used to weigh small masses. Their preferred use is in the laboratory, and stringent requirements are imposed on measurement resolution. As the masses to be weighed are small, even minor extraneous factors can lead to inaccuracies. The maximum load that can be weighed is normally in the range from 500 milligram to fifteen kilogram, while the scale division is in most cases smaller than 10-7 times the maximum load.

The measurement results of these weighing apparatuses can be influenced even by small extraneous factors such as for example pressure fluctuations of the ambient air or air currents. A precision weighing apparatus's accuracy and repeatability are thus highly dependent on the environment in which it is installed.

Air currents account for large random errors in measurement. The air currents generate spurious forces via impact pressure or viscous friction onto the weighing pan and the object to be weighed. These spurious forces are high especially if the weighing object possesses a large surface. Air currents not only cause fluctuations of the weighing value, but may offset them as well. Air conditioners, heaters and fume hoods produce such air currents.

Precision weighing apparatuses are very sensitive to air currents such that the movement of the surrounding air molecules will cause the reading to continuously fluctuate as they bounce off the weighing sample and the scale itself. The accuracy of these balances needs to be so precise that even the tiny force caused by these collisions are detected, and reported in the measurement. Draft shields are currently used to minimize air currents and get a stable reading on the existing weighing scales. Draft shields in precision balances have the purpose of preventing errors in the weighing results due to air currents. Such draft shields are either set on top of the balances or solidly attached thereto and are designed to be opened in order to introduce objects to be weighed into the interior space that is enclosed by the draft shield and to place them onto a load receiver for the weighing object, for example a weighing pan, that is located in the interior space. In such an arrangement, all of the walls of the draft shield except the rear wall are normally transparent in order to allow an unobstructed view of the weighing device. As a consequence, these transparent walls must be cleaned from time to time for hygiene purposes. Weighing cabins also are confined spaces designed within the lab space where precision weighing of materials is carried out. However, it is necessary to repeatedly clean the cabin in case of contamination spills within the cabin. The size of the weighing cabin plays an important role in the performance of the weighing apparatus as well. It is preferred that the cabin be as small as possible so that additional air currents are not generated within the cabin in turn affecting the measurement further. Another disadvantage of a weighing cabin or a draft shield is their cost of manufacture and maintenance.

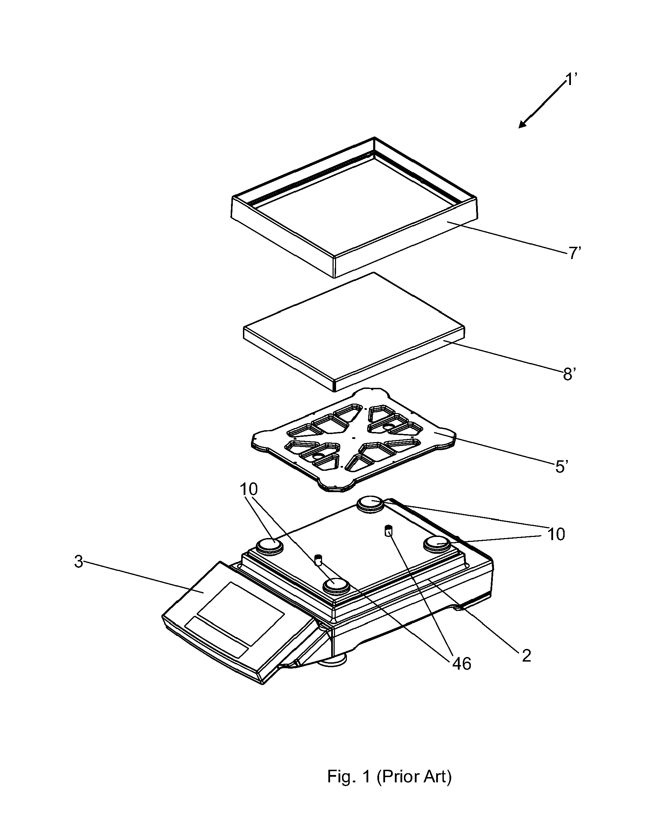

An existing precision scale 1' used for precision weighing is shown in Fig. 1. It comprises a housing 2 having mounting pads 4 and a display 3. A pan support 5' is placed on the mounting pads 10, a weighing pan 8' is placed on the pan support 5' and a draft ring 7' is placed around the weighing pan 8'. The draft ring 7' is used to protect the mounting pads 10 from air currents because the function of the mounting pads 10 is to transfer the force exerted by the object to be weighed to the weighing module (not shown in the Fig. 1) installed inside the housing 2. A disadvantage however of this scale 1' is that the pan support 5' or the weighing pan 8' does not have any mechanism for circumventing the air currents. Due to this, the air currents bounce off the weighing pan 8' or the sample and in turn generate incorrect results. Another disadvantage of the existing scale 1' is that in case of spilling of weighing material or sample into the gap between the draft ring 7' and the weighing pan 8', the entire assembly has to be dismantled in order to clean the scale 1'. Dismantling a weighing scale multiple times is not recommended as the user might cause side effects like change in calibration or change in levelling of the weighing scale.

The air currents can be minimized by using weighing pans which are specifically designed for this purpose. These weighing pans are basically consisting of grids with a plurality of square shaped openings. The grid comprises equidistant distributed bars, whereby the spaces between the bars are rather small in order to allow the user to place small objects everywhere on the grid. The openings of the grid help the circulation of air through them thus avoiding the air from affecting the sample and uplifting the weighing surface. A major disadvantage of those weighing pans is that they are difficult to clean and spilled particles can get stuck between or inside the openings of the grid.

Hence it is an objective of the present invention to find a weighing apparatus that gives quick and stable results with good repeatability and is easy to clean.

### Summary of invention

This task is solved by a weighing apparatus with the features according to the independent main claim 1. Further variations and embodiments of the subject of the invention are presented in the subordinate claims.

The inventive weighing apparatus comprising a housing with a horizontally aligned primary side in its operational state. The primary side comprises slots. Mounting pads movable positioned within the slots. The mounting pads configured to carry force exerted by an object to be weighed to a weighing module mounted within the housing. Furthermore the weighing apparatus comprises a draft tray capable of being placed on the primary side of the housing and the draft tray is preventing spilling of liquid material into the housing. The draft tray further comprising a flat plate with a surrounding outer edge, the flat plate comprising holes and the mounting pads configured to pass through the holes of the draft tray. A vertically aligned first protrusion directed towards the housing is aligned to the outer edge of the flat plate. This vertically aligned first protrusion protects the mounting pads from air currents, which would lead to errors in the weighing result. Furthermore a weighing pan can be placed on the mounting pads accessible through the holes of the draft tray. Consequently the mounting pads are placed in the holes of the draft tray. An object to be weighted can be placed on the weighing pan and the force is transmitted via the mounting pad to the weighing module. Furthermore the weighing pan comprises a central area and feet. The feet capable of being placed on the mounting pads for transferring the force exerted by the object to be weighed to the mounting pads. The central area further comprises a web of at least two spoke elements intersecting at a center of the weighing pan, the web of spoke elements thus defining a plurality of openings therein configured to allow the passage of air currents.

The advantage of this configuration is the protection of the inner of the housing from entering spilled material. Furthermore, the uplifting forces on the weighing pan and consequently the errors are small. Hence a stable result can be received quicker. It not just minimizes the air currents while weighing but also helps keep the weighing apparatus clean and easy to operate.

The flat plate is integrally molded to the draft tray. Hence, the draft tray is preventing material to contaminate the inner of the apparatus for weighing. The draft tray thus eliminates the requirement of two separate components in a weighing apparatus i.e. a drip tray and a draft ring. It is capable of functioning as both.

A further advantageous feature of the present invention is that the design of the weighing pan also improves the performance of the weighing apparatus in terms of time. The stabilizing time of the weighing apparatus is reduced considerably and the repeatability is improved.

A further advantageous feature of the present invention is that the weighing apparatus can be used at workplaces such as fume hoods, safety cabinets, biohazard cabinets, lab benches close to the air-conditioner or the windows, or in any air draft unprotected industrial environments.

A further advantageous feature of the present invention is also the usage of the spoke elements. The number of those spoke elements is typically much smaller than the number of the bars of the grid of the state of the art. Ideally the weighing pan only comprises two spoke elements. Consequently the number of openings is much smaller and each opening is much bigger than in the state of the art. Consequently particles would not stick easily to the weighing pan, but would fall on the flat plate of the draft shield. The flat plate of the draft shield is easier to clean than weighing pan. Furthermore material laying on the draft shield to not have an influence on the weighing result. On the other hand, in case material on the weighing pan has an influence on the weighing result. Therefore, an accurate weighing result can only be achieved with a clean weighing pan. In case the weighing pan is soiled, the user first has to clean the weighing pan before he can continue with the weighing procedure.

Further the apparatus for weighing may comprise at least four mounting pads, which are positioned towards the periphery of the housing. Ideally the number of mounting pads is exactly four and they are positioned towards the four corners of the housing. Ideally one weighing module is used and the forces received by the four mounting pads are transferred to the one weighing module. Ideally the forces are collected by an intermediate element and transferred to the weighing module. Alternatively a separate weighing module may be assigned to each mounting pad.

Ideally two diametrically positioned feet are connected via one spoke element. Hence the weighing pan comprises two intersecting spoke elements. Ideally there is no direct connection between two neighbored feet and the areas between two neighbored feet are free. Consequently the outer regions of the weighing pan are free and the weighing pan does comprise a flat surface only where it is really needed. The rest of the areas are free and spilled material can fall easily to the draft tray.

Advantageously the number of feet of the weighing pan corresponding to the number of mounting pads and are positioned in such a way that they are overlaying the position of the mounting pads when the weighing pan is placed above the mounting pads. Hence the geometry of the weighing pan is adapted to the geometry and position of the mounting pads. Hence the weighing pan can be accurately placed on the mounting pads.

In a preferred embodiment the weighing pan is made in one piece. The weighing pan is designed integrally.

Advantageously the central area further comprises at least one loop element positioned concentric with respect to the center of the weighing pan. Thereby a gap between the central area and the loop element is created through which air can flow freely without causing a draft on the weighing pan. The weighing pan is designed such that air currents pass through them thus causing minimum effect on the weighing results.

The spoke elements, the feet and the loop element comprising a flat in operation position horizontally oriented surface. Those flat surfaces building one surface on which the object to be weighed can be placed.

Ideally around the center of the weighing pan a round surface is located. This embodiment does guide the user to place the object to be weighted in the middle of the weighing pan. Hence, corner load errors caused by non-centrically placed weighing objects can be avoided.

Ideally this round surface is flat and in operating position horizontally oriented. The round flat surface around the center of the weighing pan and the flat surface of the spoke elements, the feet and the loop element building one surface on which the object to be weighed can be placed.

In the preferred embodiment the spoke elements, the feet and the loop element having basically the same height.

In the preferred embodiment the mounting pads are basically cylindrically shape with a flat in operational position horizontally oriented round surface, which matches the bottom side of the feet. Hence the feet are also basically round. However, other shapes e.g. squares are also possible to use.

In a preferred embodiment a vertically aligned second protrusion directed away from the housing is aligned to the outer edges of the flat plate of the draft tray. This second protrusion is avoiding spilling of material form the flat plate to the housing of the weighing apparatus. In case material is spilled only the flat plate, but not the rest of the weighing apparatus has to be cleaned.

Normally the second protrusion is smaller than the first protrusion.

In a preferred embodiment around the holes of the draft tray projections are aligned in order to prevent liquid material from entering into the housing via the holes. Consequently contamination of the inside of the weighing apparatus is avoided.

The preferred embodiment further comprises a small gap between the mounting pads and the holes of the draft tray are located. The mounting pads are not allowed to touch the draft tray. This would lead to errors. Therefore the gap has to be as small as possible in order to avoid contamination of the inside of the weighing apparatus without allowing the mounting pads to touch the draft tray.

Advantageously the apparatus for weighing further comprises an optional pan which can be positioned above the weighing pan, wherein the optional pan comprises a flat surface with edges surrounding the flat surface and walls connected to the edges of the flat surface directed towards the housing. The flat surface does not comprise openings. Hence the inventive apparatus for weighing can be used in the same way as the apparatus for weighing known from the state of the art. Consequently the inventive apparatus for weighing can be used in two alternative settings. Another advantage of the optional pan is that it provides a larger flat surface to place an object to be weighed above it. The optional pan thus gives the user the flexibility of using it to weigh objects or samples of different shapes and types.

The draft tray, the weighing pan and the optional pan can be placed on or removed from the apparatus for weighing without using tools.

The draft tray, the weighing pan and the optional pan comprising surfaces which are easy to clean and are dishwasher-safe.

The inventive apparatus for weighing is assembled by using the following steps: Placing the draft tray on the housing in such a way that the mounting pads pass through the holes of the draft tray; placing the weighing pan on the mounting pads such that the feet of the weighing pan are placed on the mounting pads. Optionally the optional pan is placed above the weighing pan.

### Brief description of drawings

An example of a weighing apparatus as per the present invention is shown in the following drawings:
- Fig.1: shows an exploded view of the components of the existing precision scale used for precision weighing comprising a housing, a pan support, a draft ring and a weighing pan;
- Fig.2: shows a the 3-D perspective of the weighing apparatus according to the present invention;
- Fig. 3: shows an exploded view of all the components of the weighing apparatus according to the present invention;
- Fig. 4a: shows the top view of the weighing pan design according to the present invention;
- Fig. 4b: shows the central area component of the weighing pan according to the present invention;
- Fig. 4c: shows the feet component of the of the weighing pan according to the present invention;
- Fig. 4d: shows the components loop element and spoke elements of the weighing pan and the common shared areas between them according to the present invention;
- Fig. 5: shows the top view of the bottom side of the weighing pan according to the present invention.

### Description of embodiments

Fig. 1 shows an exploded view of the components of the existing precision scale as described in the prior art.

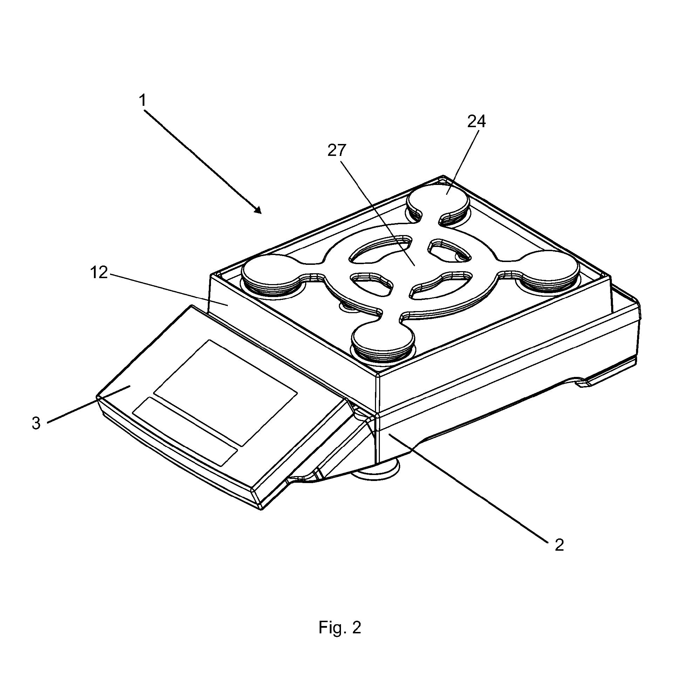

Fig. 2 shows the 3-D perspective of the inventive weighing apparatus 1 after having being assembled. The weighing apparatus 1 comprises a housing 2, a display 3, a draft tray 12 placed on the housing 2 and a weighing pan 24 which is placed on mounting pads. During the weighing procedure an object to weighted is placed typically in the center of the weighing pan 27. The weight of the object is determined using a weighing module, which are located inside the housing 2. The result is displayed on the display 3.

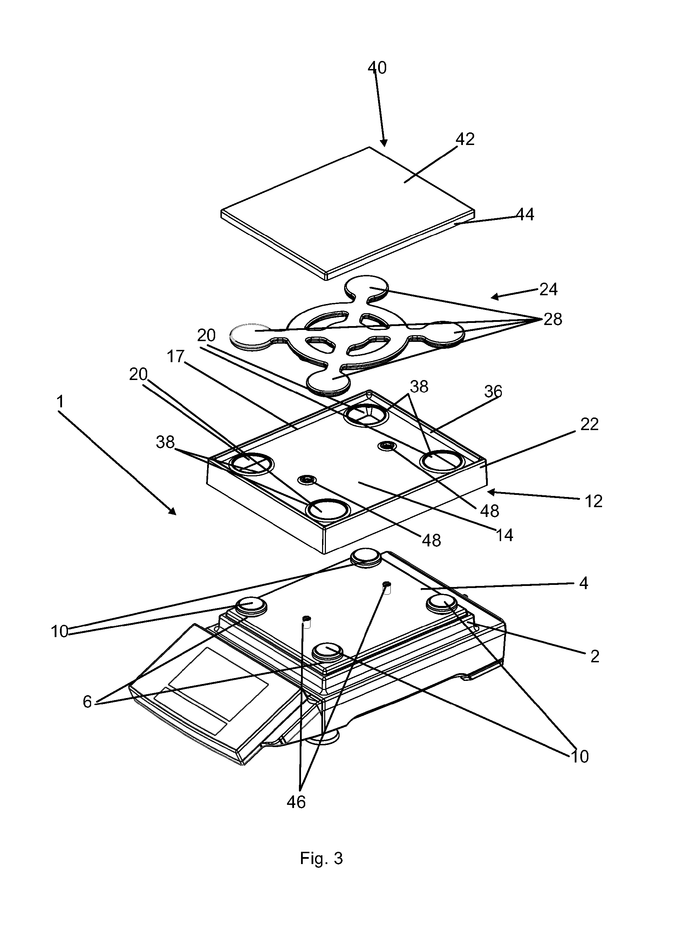

An exploded view of the components of the inventive weighing apparatus **1** is shown in Fig. 3. The weighing apparatus **1** comprises a housing **2.** A weighing module is located inside the housing 2. The housing 2 comprises a primary side **4,** which is in operational position horizontally orientated flat surface covering the weighing module. The primary side 4 is basically square shaped with four outer corners. On the primary side **4** of the housing **2** four mounting pads 10 are mounted within the slots **6** of the primary side **4.** There are four slots 6 located in the corner region of the primary side **4.** The mounting pads 10 are cylindrically shaped comprising a circular foot print. Consequently the slots 6 are round as well. Each mounting pads 10 comprises a flat horizontally aligned round surface on which the weighing pan 24 can be placed. A draft tray **12** is placed on the primary side **4** of the housing **2.** The mounting pads **10** mounted on the primary side **4** of the housing **2** pass through the holes **20** of the draft tray **12.** The draft tray 12 covering the entire primary side 4. A weighing pan **24** is placed on the mounting pads 10 after the draft tray 12 has been placed on the housing 2. The weighing pan 24 comprises four feet 28. Each foot 28 is placed on one mounting pad 10. Each foot 28 of the weighing pan is covering the flat horizontally aligned round surface of one mounting pad 10. The force thus exerted by any object to be weighed is transferred to the weighing module via the mounting pads 10 through the weighing pan **24.** An optional pan **40** can be placed onto the weighing pan **24.**

The draft tray **12** according to the present invention is shown in Fig. 3. The draft tray **12** comprises a flat plate **14** having holes 20 through which the mounting pads **10** can pass through in operational state of the weighing apparatus **1** without touching the flat plate **14.** The flat plate 14 is surrounded by an outer edge 17. To this outer edge 17 a vertically aligned first protrusion **36** directed away from the housing **2** is connected. Hence the flat plate is framed by a vertical wall, which is avoiding spilling of a sample or weighing material on the housing **2** of the weighing apparatus **1.** The draft tray also comprises a vertically aligned second protrusion **22** used for protecting the mounting pads **10** from the air currents. This second protrusion 22 is also aligned to the outer edge 17 and is directed in operating position towards the housing **2.** The second protrusion 22 and the housing 2 is designed in such a way that an essentially closed space is created between the housing 2 and the draft tray **12.** Hence air currents are prevented from entering this closed space in which the mounting pads 10 are partially located.

The holes 20 of the draft tray **12** have projections **38** around them to avoid spilling of sample into the housing **2.** The projections 38 surround the holes 20.

According to one embodiment of the present invention, the first protrusion 36 of the draft tray **12** is smaller than the second protrusion **22.**

The optional pan **40** comprises a flat surface **42** with edges surrounding the flat surface **42** and walls **44** connected to the edges of the flat surface **42** directed towards the housing **2.** In assembled state the walls 44 surround the weighing pan 24 and the optional pan 40 is covering the weighing pan 24.The optional pan 40 is placed in a form-fitting manner on the weighing pan 24.

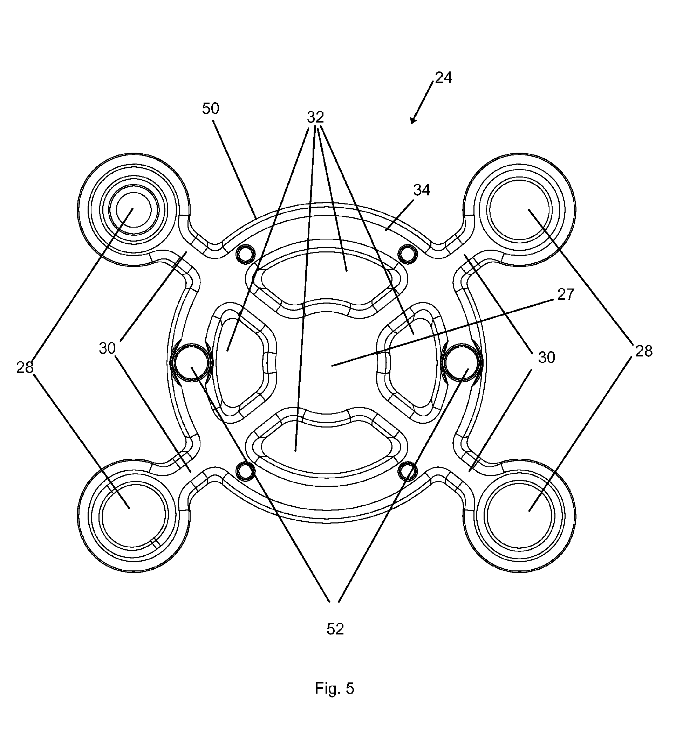

Fastening elements **46** are fixed to the housing 2 of the weighing apparatus 1. These fastening elements **46** are meant to hold the draft tray 12 in place. The fastening elements **46** pass through the grooves **48** of the draft tray 12. The weighing pan **24** that rests on the mounting pads 10 received through the holes **20** of the draft tray **12** as mentioned above, also receives these fastening elements **46** at the cavities **52** present on the bottom side **50** of the weighing pan **24** as seen in Fig. 5. However the fastening elements 46 are not touching the weighing pan 24 because this would lead to errors.

The apparatus **1** for weighing comprises four mounting pads 10 which are placed towards the periphery of the housing 2. In case of a rectangular housing 2, the mounting pads 10 are placed towards the four corners of the housing 2.

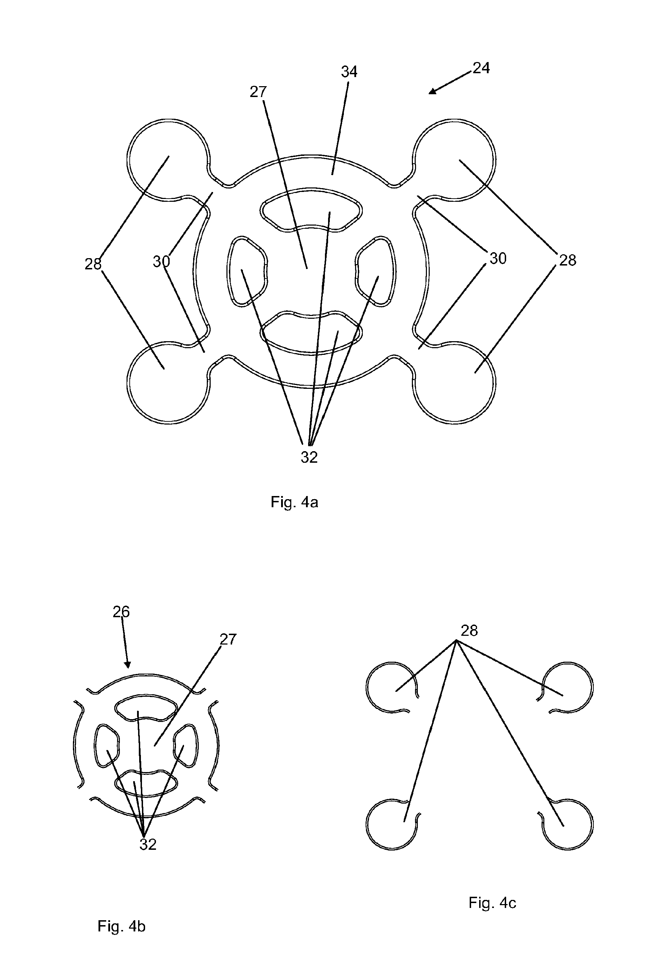

The top view of the weighing pan **24** according to one embodiment of the present invention is shown in Fig. 4a. As seen in Fig. 4a, the weighing pan **24** has a central area **26** and feet **28** located in the four outer corners of the weighing pan **24.** The feet **28** can be placed on the mounting pads **10** (shown in Fig. 3). The feet 28 are connected via two spoke elements 30 with each other. The diametrically positioned feet 28 are connected via a spoke element 30. Hence the weighing pan 24 comprises to two spoke elements 30. The crossing point of those two spoke elements 30 defines the center 27 of the weighing pan 24. The central area 26 is located around the center 27 of the weighing pan 24. Around the center 27 of the weighing pan 24 an essentially round flat area is located, which guides the user to place the object to be weighed in the center 27 of the weighing pan 24. Around the center 27 of the weighing pan 24 a loop element 34 is arranged. The loop element 34 is essentially circular shaped. The center of the loop element 34 is congruent with the center of the weighing pan 24. The center of the essentially round flat area is congruent with the center 27 of the weighing pan 24. Hence there are equidistant openings 32 created within the weighing pan 24. The diameter of the round area around the center 27 of the weighing pan 24 and the width of the loop element 34 are chosen in such a way that openings 32 are created between the round area around the center 27 and the loop element 34.

The spoke elements 30, the feet 28 and loop element 34 comprising a flat in operation position horizontally oriented surface. Those flat surfaces and the round flat area located around the center of the weighing pan 27 building one surface on which the object to be weighed can be placed. This surface comprises the openings 32, which allows passage of air through the weighing pan 24.

The weighing pan 24 comprising the round flat area around the center of the weighing pan 27, the spoke elements 30, the feet 28 and the loop element 34. The weighing pan 24 is formed in one part.

The round flat area around the center of the weighing pan 27, the spoke elements 30, the feet 28 and the loop element 34 having basically the same thickness in vertical direction in operational position.

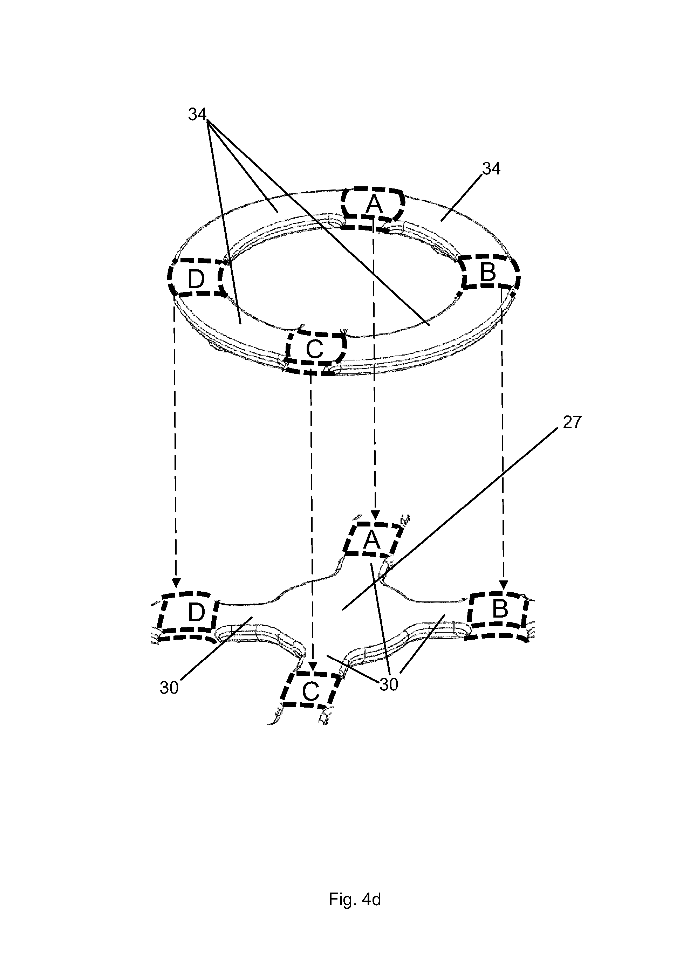

Fig. 4b, 4c and 4d showing the central area 26 component of the weighing pan 24. The central area 26 comprises a web of at least two spoke elements **30** intersecting at the center 27 of the weighing pan **24.** The central area **26** further comprises at least one loop element **34.** The loop element **34** is positioned concentric to the center 27 of the weighing pan **24.** Openings **32** are defined between the web of spoke elements 30 and the loop element **34** as seen in the Fig. 4b and 4d. These openings 32 aid the passage of air currents through them.

Fig. 4c shows the feet **28** component of the weighing pan **24.** As seen in Fig. 4d, the areas marked as **A, B, C** and **D** are the common shared areas between the two components namely the spoke elements **30** and the loop element **34.**

The weighing pan **24** according to the present invention comprises four feet **28** which are placed on four mounting pads **10** placed towards the periphery of the housing **2.** In case of rectangular housing, the feet **28** of the weighing pan **24** are placed at the four corners of the housing **2.**

Fig. 5 shows the bottom side **50** of the weighing pan **24.** The bottom side **50** of the weighing pan **24** has a center **27,** spoke elements **30** intersecting at the center **27,** a loop element **34** placed concentric with respect to the center **27** of the weighing pan **24,** the loop element **34** intersecting the spoke elements 30 thus defining openings **32** therein and feet **28** present at the end of each of the spoke elements **30.** The feet **28** are meant to be placed on the mounting pads 10 present on the housing **2** accessible through the holes **20** of the draft tray **12** (shown in Fig. 3). The bottom side **50** of the weighing pan **24** has cavities **52** positioned on the loop element **34** of the weighing pan **24** such that the fastening elements **46** fixed to the housing 2 (shown in Fig. 3) are received into these cavities **52** after passing through the grooves **48** of the draft tray **12** to keep the draft tray **12** in place without touching the weighing pan 24.

### Reference signs list

- 1, 1': Weighing apparatus
- 2: Housing of the weighing apparatus
- 3: Display of the weighing apparatus
- 4: Primary side of the housing
- 5': Weighing pan support
- 6: Slots within the housing
- 7': Draft ring
- 8': Weighing pan (state of the art)
- 10: Mounting pads
- 12: Draft tray
- 14: Flat plate of the draft tray
- 17: Outer edge of the draft tray
- 20: Holes in the draft tray
- 22: First protrusion
- 24: Inventive weighing pan
- 26: Central Area of the weighing pan
- 27: Centre of the weighing pan
- 28: Feet of the weighing pan
- 30: Spoke elements of the weighing pan
- 32: Openings within the weighing pan
- 34: Loop Element of the weighing pan
- 36: Second protrusion
- 38: Projection around the holes
- 40: Optional pan
- 42: Flat surface of the optional pan
- 44: Walls of the optional pan
- 46: Fastening element
- 48: Grooves in the draft tray
- 50: Bottom side of the weighing pan
- 52: Cavities at the bottom side of the weighing pan

## Claims

1. An apparatus (1) for weighing, the apparatus (1) comprising a housing (2) with a horizontally aligned primary side (4) in its operational position, the primary side (4) comprising slots (6); mounting pads (10) movably positioned within the slots (6), the mounting pads (10) configured to carry weight of an object to be weighed to at least one weighing module mounted within the housing (2); a draft tray (12) for preventing spilling of liquid material into the housing (2), the draft tray (12) capable of being placed on the primary side (4) of the housing (2); the draft tray (12) further comprising a flat plate (14) with an surrounding outer edge (17), the flat plate (14) further comprising holes (20), the mounting pads (10) configured to pass through the holes (20) of the draft tray (12), a vertically aligned first protrusion (22) directed towards the housing (2) is aligned to the outer edge (17) of the flat plate (14) for protecting the mounting pads (10) from air currents; and a weighing pan (24) capable of being placed on the mounting pads (10) accessible through the holes (20) of the draft tray (12) for weighing the object placed on itself; **characterized by,** the weighing pan (24) comprises a central area (26) and feet (28), the feet (28) capable of being placed on the mounting pads (10) for transferring the force exerted by the object to be weighed to the mounting pads (10); the central area (26) further comprises a web of at least two spoke elements (30) intersecting at a center of the weighing pan (27), the web of spoke elements (30) thus defining a plurality of openings (32) therein configured to allow the passage of air currents.

2. An apparatus (1) for weighing according to claim 1, wherein the mounting pads (10) are at least four and are positioned towards the periphery of the housing (2).

3. An apparatus (1) for weighing according to claim 1 or 2, wherein the mounting pads (10) are at least four and are positioned towards the corner of the housing (2).

4. An apparatus (1) for weighing according to any of the above claims, wherein the number of feet (28) of the weighing pan (24) corresponding to the number of mounting pads (10) and are positioned in such a way that they are overlaying the position of the mounting pads (10) when the weighing pan (24) is placed above the mounting pads (10).

5. An apparatus (1) for weighing according to any of the above claims, wherein the central area (26) of the weighing pan (24) further comprises at least one loop element (34) positioned concentric with respect to the center of the weighing pan (27).

6. An apparatus (1) for weighing according to any of the above claims, wherein around the center of the weighing pan (26) a round surface is located.

7. An apparatus (1) for weighing according to any of the above claims, wherein a vertically aligned second protrusion (36) directed away from the housing (2) is aligned to the outer edges (17) of the flat plate (14) for preventing the spilling of material from the flat plate (14).

8. An apparatus (1) for weighing according to any of the claim 7, wherein the second protrusion (36) is smaller than the first protrusion (22).

9. An apparatus (1) for weighing according to any of the above claims, wherein around the holes (20) of the draft tray (12) projections (38) are aligned in order to prevent liquid material from entering into the housing (2) via the holes (20).

10. An apparatus (1) for weighing according to any of the above claims, wherein between the mounting pads (10) and the holes of the draft tray (20) a small gap is located.

11. An apparatus (1) for weighing according to any of the above claims, wherein the apparatus (1) further comprises an optional pan (40) which can be positioned above the weighing pan (24), wherein the optional pan (40) comprises a flat surface (42) with edges surrounding the flat surface (42) and walls (44) connected to the edges of the flat surface (42) directed towards the housing (2).

12. A method for assembling an apparatus (1) for weighing according to any of the above claims, wherein the method comprising the steps of placing the draft tray (12) on the housing (2) such that the mounting pads (10) pass through the holes (20) of the draft tray (12); placing the weighing pan (24) on the mounting pads (10) such that the feet (28) of the weighing pan (24) are placed on the mounting pads (10).

13. A method for assembling an apparatus (1) for weighing according to claim 12 claims, the method further comprising placing an optional pan (40) above the weighing pan (24).

14. Weighing tray according to one of the claims 1 to 9.
